# EUROPEAN PATENT SPECIFICATION

(11) **EP 3 300 576 B1**
(45) Date of publication and mention of the grant of the patent: **18.03.2020**
(21) Application number: 17193626.3
(22) Date of filing: 28.09.2017
(51) Int. Cl.: A01D 41/12

(54) **RESIDUE SPREAD CONTROL USING CROP DEFLECTOR COMMANDS INPUT BY THE OPERATOR AND SATNAV COMBINE BEARING**
ERNTERESTSTREUKONTROLLE MITTELS EINGABE DES BEDIENERS VON ERNTEGUTDEFLEKTORBEFEHLEN UND SATNAV-KOMBINATIONSPEILUNG
COMMANDE DE L'ÉTALEMENT DE RÉSIDU À L'AIDE D'ENTRÉES DE COMMANDES DE DÉFLECTEUR DE RÉCOLTE PAR L'OPÉRATEUR ET LE SENS DE DÉPLACEMENT DETERMINÉ PAR SATNAV

(30) Priority: 01.10.2016 US 201615283393
(43) Date of publication of application: 04.04.2018
(73) Proprietor: Deere & Company, Moline, IL 61265 (US)
(72) Inventor: Vandike, Nathan R, 68163 Mannheim (DE); Thomsen, Drew, 68163 Mannheim (DE); Readel, Paul, 68163 Mannheim (DE)
(74) Representative: Holst, Sönke

(56) References cited:
- EP-A1- 0 685 151
- EP-A2- 2 314 147
- EP-A2- 2 382 853
- WO-A1-2017/075002

## Description

### Field of the Invention

This invention relates to agricultural combines. More particularly, it relates to systems for controlling the distribution of crop residue in agricultural combines.

### Background

Agricultural combines gather crop plants from the ground, separate the actual crop from the residue, and then distribute the residue over the ground behind the combine. It is desirable to spread residue evenly over the ground behind the combine, covering the ground that has just been harvested. Typically this is done by ejecting the residue away from the rear of the combine at high speed. This is typically done accelerating the residue and throwing it against steering vanes that steer it into a wide swath, typically 10-20 m wide. Alternatively, a rotary spreader configured like a large fan can spread the crop over the ground.

Wind can blow the crop residue to one side or the other as it is flung from the rear of the combine, travels through the air, and is deposited on the ground. For this reason, the vanes and/or spreaders can be steered by the operator to steer the swath of crop residue ejected into the air.

If the crop residue is blown by the wind more to the right side of the combine, the vanes and/or spreaders can be steered to the left, thus ejecting the crop residue more to the left, and thus counteracting the wind's effect to blow the crop residue to the right. When the crop residue is blown by the wind more to the left side of the combine, the vanes and/or spreaders can be similarly steered to the right to counteract the wind.

In this manner, an even distribution of crop residue can be provided on the ground regardless of the wind direction.

To provide the appropriate amount of correction, the combine must determine what direction the wind is blowing with respect to the combine. For example, if the wind is blowing toward the right side of the combine, the combine must steer the vanes and/or spreaders to the left. If the wind is blowing toward the left side of the combine, the combine must steer the vanes and/or spreaders to the right.

Typically, combine operators manually adjust the position of the vanes and/or spreaders every time he turns a corner in the field and proceeds in a new direction, since turning a corner causes the wind to change its direction with respect to the combine, thus blowing the crop residue in a different direction.

EP 2 314 147 A2, considered as generic, describes a combine with a spreader and vanes controlled by an actuator. When the combine performs a 180° headland turn, a control unit switches the vane adjustment from a first position to a second position, such that the expelling direction can be adapted to the opposite wind direction. The headland turn can be detected by a map and a position determination system.

Since the wind is generally constant, it would be beneficial if the combine remembered the settings of the vanes and/or spreaders the operator made as a function of the combine' s direction of travel (the combine bearing), and automatically returns to that setting whenever the combine returns to that direction of travel.

It is an object of this invention to provide such a system.

### Summary

The combine with a residue spreader control system according to the invention is defined in claim 1. A residue spreader control system of an agricultural combine includes: an operator input device on the agricultural combine configured to receive a residue spreader setting from an operator and to transmit the residue spreader setting; a satellite navigation receiver on the agricultural combine configured to receive satellite signals indicating the location of the agricultural combine in a field harvesting crops and to transmit signals indicating location and bearing of the agricultural combine; a residue spreader including crop deflectors pivotally or rotatably supported on the rear of the agricultural combine, wherein the crop deflectors are disposed to receive crop residue from the combine and spread crop residue over the ground and an actuator coupled to the crop deflectors to steer the crop deflectors and at least one ECU configured to receive the residue spreader setting from the operator input device and the satellite navigation receiver signals, to determine a bearing of the combine from the satellite navigation receiver signals, wherein the ECU is further configured to store the residue spreader setting in association with a corresponding combine bearing, and to command the actuator to move the crop deflectors in a direction or with a speed that counteracts the force of the wind.

The ECU is configured to store the residue spreader settings in association with the corresponding combine bearing whenever the operator input device receives a new residue spreader setting from the operator.

The ECU is configured to periodically determine the combine bearing, to compare the combine bearing with any previously stored combine bearings that are each associated with a corresponding residue spreader setting.

When the ECU determines the combine bearing matches a previously stored combine bearing, the ECU is configured to drive the actuator of the residue spreader to the residue spreader setting that is associated with the previously stored combine bearing.

### Brief Description of the Drawings

Figure 1 is a side view of an agricultural combine having a residue spread control system in accordance with the present invention.
Figure 2 is a plan view of the agricultural combine of Figure 1 showing its movement around an agricultural field harvesting crops.
Figure 3 is a chart showing the estimated speed of a lateral component of wind as a function of the bearing of the agricultural combine following the path shown in Figure 2.
Figure 4 is a schematic diagram of the residue spread control system of the agricultural combine of the foregoing Figures.
Figure 5 is a flowchart showing a first programmed operation of the residue spread control system of the agricultural combine of the foregoing Figures.
Figure 6 is a flowchart showing a second programmed operation of the residue spread control system of the agricultural combine of the foregoing Figures.

### Detailed Description of the Preferred Embodiments

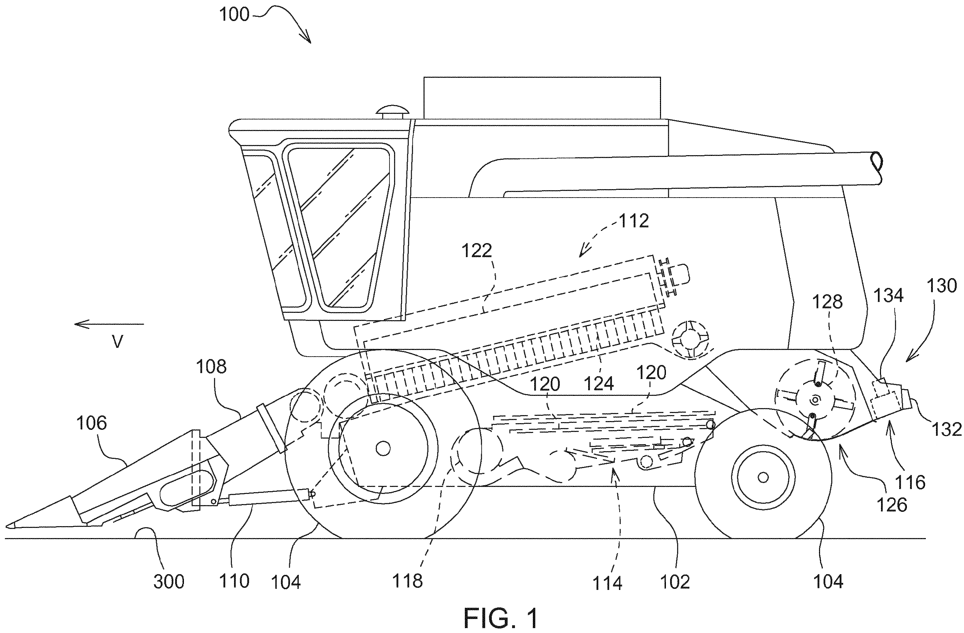

Referring to Figure 1, an agricultural combine 100 is configured to travel through an agricultural field harvesting crops. The combine 100 comprises a chassis 102 supported on wheels 104. A harvesting head 106 is supported on a feeder house 108 that is supported on the chassis 102. The feeder house 108 (and hence the harvesting head 106) can be raised and lowered by actuators 110 that are coupled to and between the feeder house 108 and the chassis 102. The chassis 102 supports a threshing and separating system 112. The threshing and separating system 112 is disposed behind the feeder house 108. The combine 100 also comprises a cleaning system 114 disposed below the threshing and separating system 112. A residue distribution system 116 is disposed behind the threshing and separating system 112 and the cleaning system 114.

As the agricultural combine 100 is driven through the field, the harvesting head 106 severs crop plants adjacent to the ground and conveys them to the feeder house 108. The feeder house 108 has an internal conveyor (not shown) of conventional arrangement that carries the cut crop material upward and into an inlet of the threshing and separating system 112.

The threshing and separating system 112 threshes and separates the cut crop material into flows of crop residue and crop (i.e. grain). The grain falls into the cleaning system 114 where it is cleaned using a flow of air that is directed upward through the grain falling into the cleaning system 114. A fan 118 generates the flow of air. Sieves 120 direct the flow of air through the grain falling into the cleaning system 114. Light crop residue (i.e. husks, fines, dust, etc.) is carried rearward in the flow of air and is deposited on the ground.

The threshing and separating system 112 comprises an elongate, cylindrical threshing rotor 122 that is disposed in a concave 124. The concave 124 is formed as a half cylindrical shell having an evenly perforated surface. These perforations permit the concave to function as a grating or screen through which grain can pass but most of the residue does not. The grain falls through the perforations in the concave and downward into the cleaning system 114. The bulk of the crop residue is conveyed rearward between the rotor 122 and the concave 124 until it is released at the rear of the rotor and concave. The crop residue then falls downward into a chopper 126 that chops the residue between a row of stationary knives and rotating knives extending from a chopper cylinder 128.

This chopping process accelerates the crop residue and throws it backward into a residue spreader 130. The residue spreader 130 includes crop deflectors 132 that are coupled to an actuator 134. The crop deflectors 132 can be steered by the actuator 134 to steer the crop residue exiting the combine in a side-to-side direction.

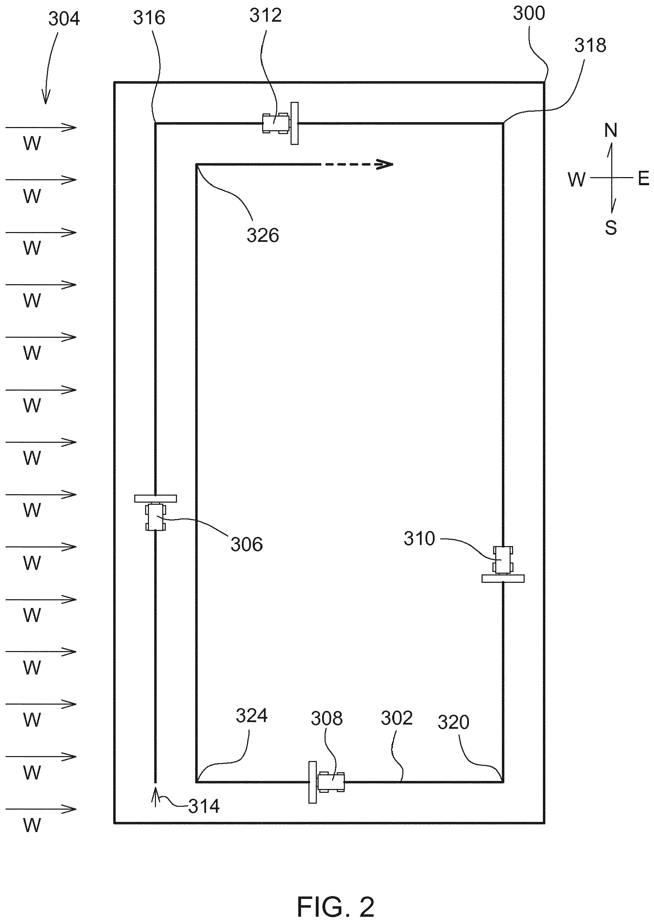

Referring to Figure 2, the agricultural combine 100 travels through an agricultural field 300 following a path 302. Wind 304 is blowing across the field in a direction "W".

When the agricultural combine is in position 306, the wind 304 is blowing directly on the left side of the combine. As a result, the crop residue expelled from the combine is pushed by the wind toward the right side of the combine. Unless this wind-force is resisted, the crop residue will not be spread evenly behind the combine, but will be blown toward the right. This will leave some of the swath of ground harvested by the combine empty of residue. It is for this reason that the residue distribution system signals the actuator 134 to move the crop deflectors 132 and steer the crop residue more to the left side of the combine, and therefore against the force of the wind 304.

When the agricultural combine is in position 308, the wind 304 is blowing directly against the front of the combine 100. In this position, the wind 304 does not steer the crop residue ejected from the combine either to the left or to the right. When the combine is in position 308, the residue distribution system signals the actuator 134 to move the crop deflectors 132 to a central, neutral position that does not direct the crop residue either to the right or to the left, but directly rearward.

When the agricultural combine is in position 310, the wind 304 is blowing directly against the right side of the combine 100. In this position, the wind 304 steers the crop residue ejected from the combine toward the left side of the combine. When the combine is in position 310, the residue distribution system signals the actuator 134 to move the crop deflectors 132 and steer the crop residue more to the right side of the combine, and therefore against the force of wind 304.

When the agricultural combine is in position 312, the wind 304 is blowing directly against the rear of the combine 100. In this position, the wind 304 does not steer the crop residue ejected from the combine either to the left or to the right. When the combine is in position 312, the residue distribution system signals the actuator 134 to move the crop deflectors 132 to a central, neutral position that does not direct the crop residue either to the right or to the left, but directly rearward.

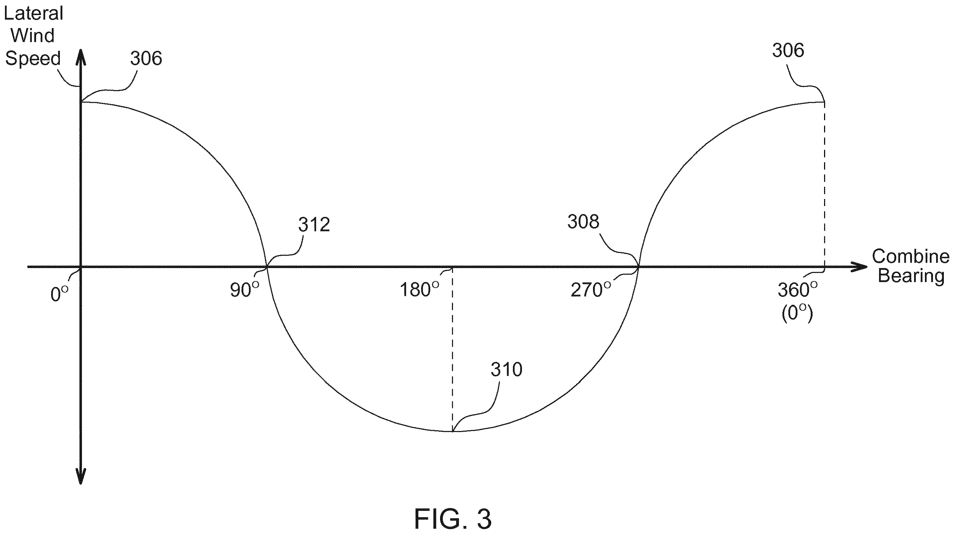

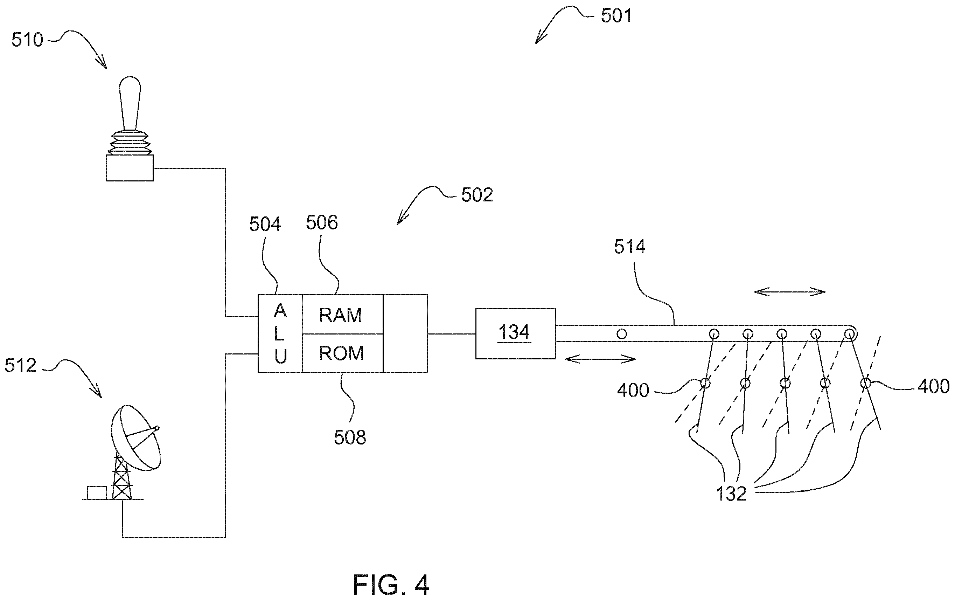

Figure 3 illustrates the lateral wind speed (and hence the lateral force of the wind on the residue being expelled from the rear of the combine) relative to the combine as a function of the heading of the combine as it travels through the field. When the combine is traveling due north (i.e. a bearing of 0° as illustrated by position 306 in Figure 3) the wind 304 is blowing directly on the left side of the combine 100, and the wind speed/force is greatest on the left side of the combine. When the combine turns to an easterly direction (i.e. a bearing of 90° as illustrated by position 312 in Figure 2) the wind is blowing directly on the rear of the combine 100, and therefore there is no left/right component of wind. When the combine turns to a southerly direction (i.e. a bearing of 180° as illustrated by position 310 in Figure 3) the wind 304 is blowing directly on the right side of the combine 100 and thus the wind speed/force is greatest on the right side of the combine. This wind speed/force is shown as a negative value in the graph of Figure 4. As the combine 100 turns around and around as it follows the path 302, it will change its bearing from 0°, to 90°, to 180°, to 270°,and then back to 0°. As a combine 100 follows the path 302, it travels through all the intermediate bearings from 0° to 360°.

At every one of these individual bearings (0°, 90°, 180°, 270°, 360°), there is a corresponding and different wind speed/force applied to the residue being expelled from the back of the combine.

And for every one of these individual bearings, the farmer will prefer a corresponding position for the crop deflectors 132 to counteract the force of the wind 304 and insure the crop residue is spread evenly behind the combine 100.

Typically, when the farmer starts traveling through a field harvesting crops (e.g. combine location 314) he will manually adjust the vanes and/or spreaders to provide a good distribution of crop residue.

When the farmer gets to the end of the field and changes the direction of the combine (e.g. at combine location 316), he again has to manually adjust the vanes and/or spreaders since the wind acting on the combine is now coming from a radically different direction. The same is true when the farmer turns again at combine locations 318, then 320, then 324, and then 326, etc.

It should be obvious that the farmer will return the combine to the same bearings he has traveled (0°, 90°, 180°, 270°, 360°) on each successive pass through the field in order to follow as closely as possible to the previously harvested portions of the field. Since the absolute wind direction does not change much during the harvesting of a single field, the farmer typically adjusts the vanes and/or spreaders back to the same position they were in on a previous pass every single time he turns a corner. This is time-consuming and distracting.

The system provided herein eliminates this distraction by letting the farmer select a particular setting of the vanes and/or spreaders the first time he travels around the field, and then automatically returns to those settings every time the farmer turns the corner and travels back again in the same direction.

Using the example of Figure 2 to illustrate the operation of the system, when the farmer adjusts the vanes and/or spreaders at combine location 314, the system remembers these settings and associates them with the bearing of the combine (i.e. North or 0° in this case).

Likewise, when the farmer next adjusts the vanes and/or spreaders at combine location 316 after he has turned a corner, at location 316, the system remembers the settings and associates them with the bearing of the combine at location 316 (i.e. East or 90°).

Similarly, when the farmer turns due South at location 318 and again adjusts the vanes and/or spreaders the system remembers these new settings and associates them with the bearing of the combine at location 318 (i.e. South or 180°).

The operation is likewise when the farmer turns the corner and adjusts the vanes at location 320.

When the farmer reaches the location 324 and proceeds in a northerly direction (0°) the farmer does not have to adjust the vanes and/or spreaders. Instead, the system determines that the combine is traveling in a direction for which it previously remembered (i.e. electronically recorded) settings for the vanes and/or spreaders. When the system determines that it is again traveling on a previously-remembered bearing, the system automatically returns the vanes and/or spreaders to the settings associated with the northerly heading. Likewise when the combine reaches location 326 and turns the corner to again head East (90°). In short, every time the farmer returns the combine to a previously travelled and stored direction, the system will automatically return the vanes and/or spreaders to the settings associated with that direction.

Thus, the farmer only has to adjust the settings of the vanes and/or spreaders once on each tack and the system will automatically adjust the vanes and/or spreaders every time the combine travels in the same direction.

In Figure 4, a residue spreader control system 500 is illustrated that steers the crop deflectors 132 based upon settings that the operator previously stored in the manner described above.

In Figure 4, and electronic control unit 501 (a.k.a. "ECU") comprises a digital microprocessor 502, an arithmetic logic unit 504 (a.k.a. "ALU"), a random-access memory 506 (a.k.a. "RAM"), and read-only memory 508 (a.k.a. "ROM"). A series of digital instructions is stored in the ROM 508 controls the operation of the ALU 504 and thus controls the operation of the spreader control system 500. The RAM 506 stores intermediate calculations performed by the ALU 504 as the ALU executes the programmed instructions.

The ECU 501 is connected to an operator input device 510. The operator input device 510 is configured to receive signals from the operator and to transmit those signals to the ECU 501 for use by the ECU 501 as it executes its programmed instructions.

The ECU 501 is also connected to the actuator 134. The ECU 501 is configured to command the actuator 134 to move, and to steer the crop deflectors 132 to which the actuator 134 is mechanically coupled.

The ECU 501 is also connected to a satellite navigation receiver 512 (e.g. GPS, GLONASS or similar system). The satellite navigation receiver 512 transmits signals to the ECU 501 indicating the position and/or bearing of the combine as it travels through the field harvesting crops.

The operator input device 510 may be a joystick, switch, knob, quadrant lever, keyboard, touchscreen, or other device that is configured to be manipulated by the operator to provide a signal corresponding to a desired setting of the vanes and/or spreaders.

The ECU 501 may be a single ECU, or it may be several ECUs coupled together in a network and that are collectively programmed to perform the functions described herein.

The actuator 134 may be a hydraulic, electric, or pneumatic actuator. It may be a linear or rotary actuator. In the example of Figure 4, the actuator 134 is a linear actuator and is coupled to a linkage 514. As the shaft of actuator 134 extends (responsive to signals received from the ECU 501) it moves linkage 514, which in turn pivots the crop deflectors 132 to the left about each of their pivot points 400. In this position, the crop deflectors 132 steer the crop residue toward the left side of the combine. As the actuator 134 retracts (again, responsive to signals received from the ECU 501) it moves linkage 514, which in turn pivots the crop deflectors 132 to the right. In this position the crop deflectors 132 steer the crop residue toward the right side of the combine. In an alternative arrangement, the actuator 134 may be a motor coupled to crop deflectors that form blades or vanes on a fan such as those in a power spreader. As the motor spins, it impacts, deflects, and ejects crop residue. In such arrangements, crop is thrown farther from or nearer to the agricultural combine based upon the speed at which the motor is driven. In these arrangements, the ECU 501 controls the speed of the motor (actuator 134) and therefore how far the crop is thrown to one side or the other of the combine.

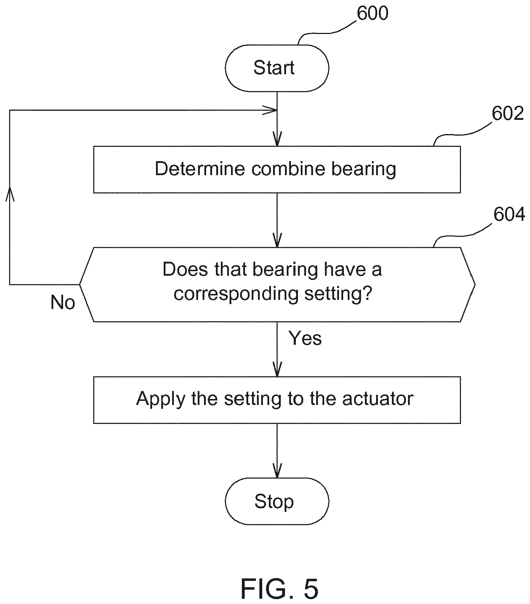

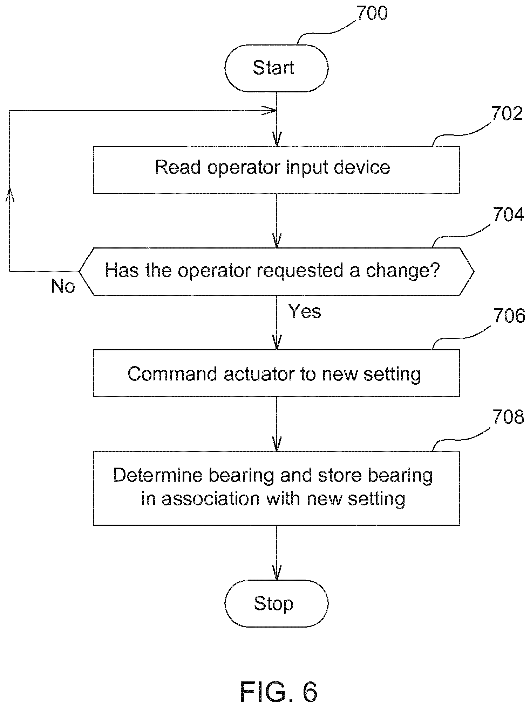

Figure 5 shows the programmed operation of the residue spreader control system 500. The operation illustrated in Figure 6 is provided by the programmed instructions executed by the ALU 504 of the ECU 501 and by interactions with the operator of the combine 100.

In step 600, the operation starts. In step 602, the ECU 501 determines the bearing of the combine based upon the signals received from the satellite navigation receiver. In step 604, the ECU 501 uses the bearing of the combine determined in 602 to look up a corresponding vane and/or spreader setting in a lookup table stored in the random-access memory 506. If the ECU 501 finds a vane and/or spreader setting corresponding to the bearing in step 604 it proceeds to step 606. In step 606, the ECU applies the vane and/or spreader setting to the actuator 134 thereby automatically moving the crop deflectors 132 to the position indicated by the vane and/or spreader setting. If the ECU 501 does not find a vane and/or spreader setting corresponding to the bearing, it returns to step 602 without changing the setting of the vane and/or spreader. The steps of Figure 5 are repeated periodically as the agricultural combine 100 travels through the field harvesting crops.

Figure 6 shows the programmed operation of the residue spreader control system 500 that is also periodically executed by the ECU 501.

In step 700, the operation starts. In step 702, the computer reads the operator input device 510 to determine whether the operator is requesting a change in the setting of the vanes and/or spreader. In step 704, the computer determines whether the operator has requested a change. If the operator requested a change in step 704, the ECU 501 then executes step 706. In step 706, the ECU 501 commands the actuator 134 to drive the crop deflectors 132 to the position requested by the operator. In step 708, the ECU 501 determines the current bearing of the combine and saves the current bearing of the combine in association with the new setting of the vanes and/or spreader in the lookup table (step 604). If the operator did not request a change in step 704, the ECU returns to execute step 702.

The steps outlined in Figure 5 show how the ECU 501 monitors the changing bearing of the combine and automatically changes the setting of the vanes and/or spreader to a setting previously saved in the lookup table without operator input. In this manner, the farmer does not automatically have to adjust the vanes and/or spreader every time he changes direction (e.g. whenever he turns a corner in the field).

The steps outlined in Figure 6 show how the ECU 501 receives new settings from the operator whenever the operator makes a change in the settings of the vanes and/or spreader and automatically saves the new settings to the lookup table in association with the bearing of the combine.

It should be noted that a number of modifications to the described embodiment are possible. For example, instead of the movable crop deflectors, one could use a straw spreader with two rotating spreader fans located side-by-side downstream the straw chopper 126 with variable rotation speed controlled by the ECU 501 (cf. EP 2 119 338 A2) and/or position-variable shrouds controlled by the ECU 501 (cf. DE 103 42 922 A1). The controlled spreader fans and/or shrouds would then be considered as crop deflectors in the sense of to the claims.

## Claims

1. A combine (100) with a residue spreader control system (500), the combine (100) comprising:
an operator input device (510) on the agricultural combine (100) configured to receive a residue spreader setting from an operator and to transmit the residue spreader setting;
a satellite navigation receiver (512) on the agricultural combine (100) configured to receive satellite signals indicating the location of the agricultural combine (100) in a field harvesting crops and to transmit signals indicating location and geographical bearing of the agricultural combine (100);
a residue spreader (130) including crop deflectors (132) pivotally or rotatably supported on the rear of the agricultural combine (100), wherein the crop deflectors (132) are disposed to receive crop residue from the combine (100) and spread crop residue over the ground and an actuator (134) coupled to the crop deflectors (132) to steer the crop deflectors; and
at least one ECU (501) configured to receive the residue spreader setting from the operator input device (510) and the satellite navigation receiver signals,
**characterized in that** the ECU (501) is configured to determine a geographical bearing of the combine (100) from the satellite navigation receiver signals, wherein the ECU (501) is further configured to store the residue spreader setting in association with a corresponding combine bearing, and to command the actuator (134) to move the crop deflectors (132) in a direction or with a speed that counteracts the force of the wind,
wherein the ECU (501) is configured to store the residue spreader settings in association with the corresponding geographical bearing of the combine whenever the operator input device (510) receives a new residue spreader setting from the operator and to periodically determine the geographical bearing of the combine (100), to compare the geographical bearing of the combine (100) with any previously stored combine bearings that are each associated with a corresponding residue spreader setting, and when the ECU (501) determines that the combine bearing matches a previously stored combine bearing, the ECU (501) is configured to drive the actuator (134) of the residue spreader to the residue spreader setting that is associated with the previously stored combine bearing.

## Patentansprüche

1. Mähdrescher (100) mit einem Ernterestestreuer-Steuersystem (500), wobei der Mähdrescher (100) Folgendes umfasst:
eine Bedienereingabeeinrichtung (510) auf dem Mähdrescher (100), die dafür ausgelegt ist, eine Ernterestestreuer-Einstellung von einem Bediener zu empfangen und die Ernterestestreuer-Einstellung zu übertragen,
einen Satellitennavigationsempfänger (512) auf dem Mähdrescher (100), der dafür ausgelegt ist, Satellitensignale zu empfangen, welche die Position des Mähdreschers (100) auf einem Feld beim Ernten von Erntegut anzeigen, und Signale zu übertragen, welche die Position und geografische Peilung des Mähdreschers (100) anzeigen,
einen Ernterestestreuer (130), der Erntegutablenker (132), die schwenkbar oder drehbar an der Rückseite des Mähdreschers (100) gelagert sind, wobei die Erntegutablenker (132) angeordnet sind, um Erntereste von dem Mähdrescher (100) entgegenzunehmen und Erntereste über den Boden zu verstreuen, und einen Aktuator (134) beinhaltet, der an die Erntegutablenker (132) gekoppelt ist, um die Erntegutablenker zu lenken, und
mindestens eine ECU (501), die dafür ausgelegt ist, die Ernterestestreuer-Einstellung von der Bedienereingabeeinrichtung (510) und die Signale des Satellitennavigationsempfängers zu empfangen,
**dadurch gekennzeichnet, dass** die ECU (501) dafür ausgelegt ist, aus den Signalen des Satellitennavigationsempfängers eine geografische Peilung des Mähdreschers (100) zu bestimmen, wobei die ECU (501) ferner dafür ausgelegt ist, die Ernterestestreuer-Einstellung zusammen mit einer entsprechenden Mähdrescherpeilung zu speichern und den Aktuator (134) anzuweisen, die Erntegutablenker (132) in einer Richtung oder mit einer Geschwindigkeit zu bewegen, die der Kraft des Windes entgegenwirkt,
wobei die ECU (501) dafür ausgelegt ist, die Ernterestestreuer-Einstellungen zusammen mit der entsprechenden geografischen Peilung des Mähdreschers immer dann zu speichern, wenn die Bedienereingabeeinrichtung (510) vom Bediener eine neue Ernterestestreuer-Einstellung empfängt, und die geografische Peilung des Mähdreschers (100) periodisch zu bestimmen, um die geografische Peilung des Mähdreschers (100) mit allen zuvor gespeicherten Mähdrescherpeilungen, welche jeweils einer entsprechenden Ernterestestreuer-Einstellung zugeordnet sind, zu vergleichen, und wenn die ECU (501) bestimmt, dass die Mähdrescherpeilung mit einer zuvor gespeicherten Mähdrescherpeilung übereinstimmt, die ECU (501) dafür ausgelegt ist, den Aktuator (134) des Ernterestestreuers in die Ernterestestreuer-Einstellung zu bewegen, die der zuvor gespeicherten Mähdrescherpeilung zugeordnet ist.

## Revendications

1. Moissonneuse-batteuse (100) avec un système de commande d'épandeur de résidu (500), la moissonneuse-batteuse (100) comprenant :
un dispositif d'entrée opérateur (510) sur la moissonneuse-batteuse agricole (100) configuré pour recevoir un réglage d'épandeur de résidu à partir d'un opérateur et pour transmettre le réglage d'épandeur de résidu ;
un récepteur de navigation par satellite (512) sur la moissonneuse-batteuse agricole (100) configuré pour recevoir des signaux de satellite indiquant la localisation de la moissonneuse-batteuse agricole (100) dans un champ, récoltant des cultures, et pour transmettre des signaux indiquant une localisation et un relèvement géographique de la moissonneuse-batteuse agricole (100) ;
un épandeur de résidu (130) incluant des déflecteurs de culture (132) supportés de façon pivotante ou de façon rotative sur l'arrière de la moissonneuse-batteuse agricole (100), dans laquelle les déflecteurs de culture (132) sont disposés pour recevoir un résidu de culture à partir de la moissonneuse-batteuse (100) et épandre le résidu de culture sur le sol et un actionneur (134) couplé aux déflecteurs de culture (132) pour orienter les déflecteurs de culture ; et
au moins une ECU (501) configurée pour recevoir le réglage d'épandeur de résidu à partir du dispositif d'entrée opérateur (510) et les signaux de récepteur de navigation par satellite,
**caractérisée en ce que** l'ECU (501) est configurée pour déterminer un relèvement géographique de la moissonneuse-batteuse (100) à partir des signaux de récepteur de navigation par satellite, dans laquelle l'ECU (501) est en outre configurée pour stocker le réglage d'épandeur de résidu en association avec un relèvement de moissonneuse-batteuse correspondant, et pour commander l'actionneur (134) pour déplacer les déflecteurs de culture (132) dans une direction ou avec une vitesse qui s'oppose à la force du vent,
dans laquelle l'ECU (501) est configurée pour stocker le réglage d'épandeur de résidus en association avec le relèvement géographique correspondant de la moissonneuse-batteuse à chaque fois que le dispositif d'entrée opérateur (510) reçoit un nouveau réglage d'épandeur de résidu à partir de l'opérateur et pour périodiquement déterminer le relèvement géographique de la moissonneuse-batteuse (100), pour comparer le relèvement géographique de la moissonneuse-batteuse (100) à de quelconques relèvements de moissonneuse-batteuse stockés auparavant qui sont chacun associés à un réglage d'épandeur de résidu correspondant, et lorsque l'ECU (501) détermine que le relèvement de moissonneuse-batteuse coïncide à un relèvement de moissonneuse-batteuse stocké auparavant, l'ECU (501) est configurée pour mettre l'actionneur (134) de l'épandeur de résidu au réglage d'épandeur de résidu qui est associé au relèvement de moissonneuse-batteuse stocké auparavant.
